(19) Europäisches Patentamt
European Patent Office
Office européen des brevets

(11) **EP 1 985 983 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(51) Int Cl.:
*G01K 1/02* (2006.01)    *G01K 7/32* (2006.01)
*G01K 11/26* (2006.01)

(21) Anmeldenummer: **08007191.3**

(22) Anmeldetag: **11.04.2008**

(54) **Temperaturmesssonde, insbesondere für ein Haushaltsgerät**

Temperature measuring probe, in particular for a household device

Sonde de mesure de la température, en particulier pour un appareil ménager

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007019403**

(43) Veröffentlichungstag der Anmeldung:
**29.10.2008 Patentblatt 2008/44**

(73) Patentinhaber: **Miele & Cie. KG**
**33332 Gütersloh (DE)**

(72) Erfinder: **Kuhn, Jens, Dr.**
**98693 Manebach (DE)**

(56) Entgegenhaltungen:
**DE-A1-102004 047 756    DE-A1-102005 015 028**
**US-A- 4 340 796**

• **SHOU-QI WANG ET AL: "A wireless surface acoustic wave temperature sensor using langasite as substrate material for high-temperature applications", JAPANESE JOURNAL OF APPLIED PHYSICS, PART 1 (REGULAR PAPERS, SHORT NOTES & REVIEW PAPERS) JAPAN SOC. APPL. PHYS. JAPAN, Bd. 42, Nr. 9B, September 2003 (2003-09), Seiten 6124-6127, XP002630354, ISSN: 0021-4922**

**Beschreibung**

Die Erfindung betrifft eine Temperaturmesssonde, der im Oberbegriff des Anspruchs 1 genannten Art.

Aus der DE 10 2005 015 028 A1 ist bereits eine derartige Temperaturmesssonde bekannt. Die bekannte Temperaturmesssonde hat eine Außenhülle, die einen elektrisch leitfähigen Abschnitt und einen elektrisch isolierenden Abschnitt aufweist, wobei in dem elektrisch leitfähigen Abschnitt der hohlen Außenhülle zumindest ein als Resonator ausgebildeter Temperatursensor und in dem elektrisch isolierenden Abschnitt eine als verkürzter Monopol ausgebildete Antenne angeordnet sind, die miteinander elektrisch leitend verbunden sind. Die Antenne ist aus Platzspargründen als verkürzter Monopol ausgebildet. Hierdurch ist ein besonders kompakter Aufbau der Temperaturmesssonde ermöglicht. Um die als verkürzter Monopol ausgebildete Antenne hinsichtlich der Impedanz besser an den Resonator anzupassen, weist die bekannte Antenne eine Verlängerungsspule auf. Diese Anpassung ist bei verkürzten Monopolen erforderlich, da diese im allgemeinen eine sehr geringe Impedanz aufweisen und somit die Leistungsübertragung vom und zum Resonator beschränkt ist.

Der Erfindung stellt sich somit das Problem eine Temperaturmesssonde anzugeben, bei der die Impedanzanpassung der als verkürzter Monopol ausgebildeten Antenne an den als Resonator ausgebildeten Temperatursensor weiter verbessert ist.

Erfindungsgemäß wird dieses Problem durch eine Temperaturmesssonde mit den Merkmalen des Patentanspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen insbesondere in der verbesserten Impedanzanpassung der als verkürzter Monopol ausgebildeten Antenne an den Resonator. Hierdurch ist es möglich, die Antenne kompakt auszubilden, so dass ein platzsparender Aufbau der Temperaturmesssonde ermöglicht ist. Durch die erfindungsgemäße Anordnung wird die Impedanzanpassung durch die bewusste, reproduzierbare Nutzung der Dachkapazität erreicht. Die Dachkapazität wird zwischen der Antennenspitze und dem elektrisch leitenden Abschnitt der Außenhülle und einem dazwischen angeordneten, geeignet ausgewählten Dielektrikum gebildet. Als Dielektrikum dient hier der elektrisch isolierende Abschnitt der Außenhülle. Die Antenne und der elektrisch isolierende Abschnitt der Außenhülle sind nach Material und Ausdehnung derart aufeinander abgestimmt, dass der Wirkwiderstand etwa dem des als Resonator ausgebildeten Temperatursensors der Temperaturmesssonde in dessen Arbeitsfrequenzbereich entspricht.

Grundsätzlich ist die Außenhülle der Temperaturmesssonde nach Art und Material in weiten geeigneten Grenzen wählbar. Zweckmäßigerweise ist der elektrisch leitfähige Abschnitt aus einem metallischen Material und der elektrisch isolierende Abschnitt aus einem nichtmetallischen Material ausgebildet.

Eine vorteilhafte Weiterbildung der vorgenannten Ausführungsform sieht vor, dass der elektrisch isolierende Abschnitt als ein Griffteil aus Kunststoff ausgebildet ist. Hierdurch ist die Funktionalität dieses Abschnitts der Außenhülle erhöht. Ein zusätzliches Griffteil ist nicht erforderlich.

Eine besonders vorteilhafte Weiterbildung der vorgenannten Ausführungsform sieht vor, dass das Griffteil einen Kern aus einem Kunststoffmaterial hoher Festigkeit und eine Deckschicht aus einem Kunststoffmaterial hoher Elastizität aufweist. Auf diese Weise ist erreicht, dass das Griffteil eine hohe Stabilität bei einer gleichzeitig guten Haptik aufweist. Durch den festen Kern wird zudem erreicht, dass sich die weichere Deckschicht nicht in ungewünschter Weise verformt.

Eine besonders vorteilhafte Weiterbildung sieht vor, dass die elektrische Verbindung des Temperatursensors mit der Antenne und mit dem elektrisch leitfähigen Abschnitt der Außenhülle durch eine Koaxialleitung gebildet ist, wobei der Temperatursensor über den Innenleiter der Koaxialleitung mit der Antenne und über den Außenleiter mit dem elektrisch leitfähigen Abschnitt verbunden ist. Hierdurch ist die elektrische leitende Verbindung der einzelnen Bauteile auf besonders einfache und kostengünstige Weise realisiert. Insbesondere gilt dies für die elektrische Verbindung des Temperatursensors mit dem elektrisch leitfähigen Abschnitt der Außenhülle, da der Temperatursensor häufig an schwer zugänglicher Stelle in der Temperaturmesssonde angeordnet ist. Ferner ist durch die Verwendung einer Koaxialleitung eine gute Reproduzierbarkeit der Impedanzanpassung gewährleistet. Bei einer direkten galvanischen Verbindung von Temperatursensor und elektrisch leitenden Abschnitt der Außenhülle könnte sich die Kapazität zwischen der elektrisch leitenden Verbindung von Antenne und Temperatursensor und des elektrisch leitfähigen Abschnitts der Außenhülle durch eine Veränderung von deren relativen Lage zueinander verändern. Dies ist durch die erfindungsgemäße Verwendung einer Koaxialleitung wirksam verhindert. Für viele Anwendungsfälle beträgt der Wirkwiderstand des Resonators etwa 50 Ohm. Da die üblichen Koaxialleitungen ebenfalls einen Wirkwiderstand von 50 Ohm aufweisen, ist die Verwendung von Koaxialleitungen auch aus diesem Grund vorteilhaft.

Eine vorteilhafte Weiterbildung der vorgenannten Ausführungsform sieht vor, dass die elektrische Verbindung des Außenleiters der Koaxialleitung mit dem elektrisch leitfähigen Abschnitt der Außenhülle in dem Kontaktbereich des elektrisch leitfähigen Abschnitts mit dem elektrisch isolierenden Abschnitt angeordnet ist. Hierdurch ist die Zugänglichkeit der elektrischen Kontaktstelle des Außenleiters mit dem elektrisch leitfähigen Abschnitt verbessert. Insbesondere gilt dies für einen zweiteiligen Aufbau der Außenhülle, bei dem die beiden Abschnitte miteinander lösbar verbunden sind.

Eine andere vorteilhafte Weiterbildung sieht vor, dass der hohle Innenraum des elektrisch isolierenden Abschnitts zur Aufnahme der Antenne zumindest in dem Bereich der Antenne mit Schutzgas gefüllt oder evakuiert ist. Auf diese Weise ist die thermische Isolierung der Antenne weiter verbessert, so dass die Temperaturmesssonde auch bei Anwendungsfällen mit hohen Umgebungstemperaturen eingesetzt werden kann.

Ein Ausführungsbeispiel der Erfindung ist in den Zeichnungen rein schematisch dargestellt und wird nachfolgend näher beschrieben. Es zeigt

Figur 1     ein Gargerät mit einer erfindungsgemäßen Temperaturmesssonde,
Figur 2     die Temperaturmesssonde aus Fig. 1 in einer Schnittdarstellung,
Figur 3     die Temperaturmesssonde aus Fig. 2 in einer vergrößerten und teilweise geschnittenen Darstellung,
Figur 4     eine grob schematische Darstellung der elektrischen Verbindungen der einzelnen Bauteile der Temperaturmesssonde und
Figur 5     ein elektrisches Ersatzschaltbild der Antenne aus Fig. 4.

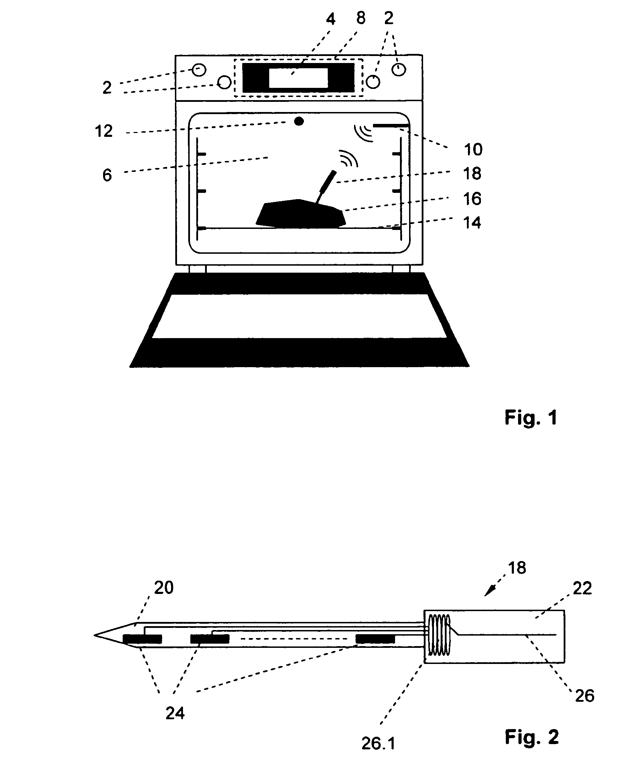

In Fig. 1 ist ein als Backofen ausgebildetes Haushaltsgerät dargestellt. Der Backofen weist Bedienelemente 2 und eine Anzeigeeinrichtung 4, eine Backmuffel 6 und eine durch eine gestrichelte Linie symbolisierte elektrische Verarbeitungseinheit 8 auf. Die Bedienelemente 2 und die Anzeigeeinrichtung 4 sind auf dem Fachmann bekannte Weise mit der elektrischen Verarbeitungseinheit 8 signalübertragend verbunden. Gleiches gilt für eine in der Backmuffel 6 angeordnete Garraumantenne 10 und eine ebenfalls in der Backmuffel 6 angeordnete elektrische Heizung 12.

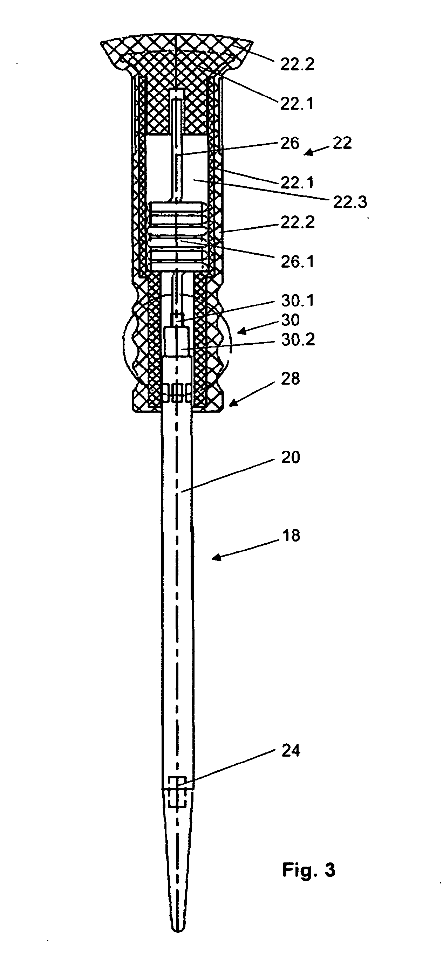

In die Backmuffel 6 ist ein auf einem Gargutträger 14 aufgelegtes als Fleischstück ausgebildetes Gargut 16 eingeschoben, in das eine als Garspieß ausgebildete Temperaturmesssonde 18 eingestochen ist. Der Aufbau der Temperaturmesssonde 18 ist anhand von Fig. 2 und 3 näher erläutert. Grundsätzlich ist die Temperaturmesssonde 18 nach Art, Material, Dimension und Anordnung in weiten geeigneten Grenzen wählbar.

Die Temperaturmesssonde 18 befindet sich auf dem Fachmann bekannte Weise mittels der Garraumantenne 10 mit der elektrischen Verarbeitungseinheit 8 in Signalübertragungsverbindung. Die weitere Funktionsweise derartiger Systeme ist in der bereits genannten DE 10 2005 015 028 A1 ausführlich beschrieben, so dass hierzu ausdrücklich auf diese Schrift verwiesen wird.

Fig. 2 zeigt die Temperaturmesssonde 18 in einer vereinfachten Darstellung. Die Temperaturmesssonde 18 weist einen als Spieß ausgebildeten elektrisch leitfähigen Abschnitt 20 und einen als Griffstück ausgebildeten elektrisch isolierenden Abschnitt 22 auf, wobei in dem Spieß 20 mehrere als Oberflächenwellenbauelemente 24 ausgebildete Temperatursensoren angeordnet sind. Im Unterschied dazu ist es jedoch auch möglich, eine Temperaturmesssonde mit nur einem einzigen Temperatursensor 24 zu verwenden. Die Anzahl der Temperatursensoren 24 ist abhängig vom jeweiligen Anwendungsfall. Bei den Oberflächenwellenbauelementen 24 des vorliegenden Ausführungsbeispiels handelt es sich lediglich um ein Beispiel für Resonatoren. Alternativ dazu können auch andere Arten von Resonatoren verwendet werden, die dem Fachmann bekannt und geeignet sind. Die Oberflächenwellenbauelemente 24 sind derart ausgewählt, dass die temperaturabhängigen Resonanzfrequenzen, die den bei dem Betrieb des Haushaltsgeräts an der Temperaturmesssonde 18 zu erwartenden Temperaturen entsprechen, in dem für das vorliegende Ausführungsbeispiel ausgewählten Frequenzband von etwa 433 MHz bis etwa 434 MHz enthalten sind. Die einzelnen Oberflächenwellenbauelemente 24 sind auf dem Fachmann bekannte Weise mit einer im Griffstück 22 angeordneten und als verkürzter Monopol ausgebildeten Antenne 26 elektrisch leitend verbunden. Um die Antenne 26 möglichst platzsparend auszubilden, ist diese teilweise als Verlängerungsspule 26.1 ausgebildet, was aber nicht zwingend erforderlich ist.

Der Aufbau der Temperaturmesssonde 18 ist anhand von Fig. 3 näher erläutert. Zur einfacheren Darstellung geschieht dies lediglich anhand eines einzigen Oberflächenwellenbauelements 24. Für die übrigen Oberflächenwellenbauelemente 24 gilt Entsprechendes.

Der als Spieß ausgebildete elektrisch leitende Abschnitt 20 aus Metall, insbesondere Edelstahl, und der als Griffteil ausgebildete elektrisch isolierende Abschnitt 22 aus Kunststoff bilden zusammen eine flüssigkeitsdichte Außenhülle 28. Wie aus Fig. 3 ersichtlich, ist die Außenhülle 28 zweiteilig ausgebildet, wobei Spieß 20 und Griffteil 22 jeweils ein Teil der Außenhülle bilden, die auf dem Fachmann bekannte Weise miteinander lösbar verbunden sind. Denkbar wäre auch eine unlösbare Verbindung der beiden Abschnitte 20 und 22, beispielsweise durch Klebung.

Das Griffteil 22 weist einen Kern 22.1 aus einem Kunststoff hoher Festigkeit, hier Polyphenylensulfid, kurz PPS, und eine Deckschicht 22.2 aus einem Kunststoff hoher Elastizität, hier Silikon, auf. Bei dem vorliegenden Ausführungsbeispiel sind aufgrund der hohen Temperaturen des Anwendungsfalles entsprechend hitzebeständige Kunststoffe erforderlich. Grundsätzlich sind jedoch auch andere dem Fachmann bekannte und geeignete andere Dielektrika denkbar. Alternativ zu dem vorgenannten zweiteiligen Aufbau des elektrisch isolierenden Abschnitt 22 wäre auch ein einteiliger Aufbau, also beispielsweise ein Griffteil aus lediglich einem einzigen elektrischen Isolator, möglich.

Die Außenhülle 28 ist innen hohl ausgebildet, wobei die als verkürzter Monopol ausgebildete Antenne 26, die zur Impedanzanpassung zusätzlich eine Verlängerungsspule 26.1 aufweist, vollständig in dem Inneren des Griffteils 22 angeordnet ist. Zur Verbesserung der thermischen Isolierung der Antenne 26, insbesondere bei Hochtemperaturanwendungsfällen, wäre auch die zusätzliche Evakuierung oder Füllung des in dem Griffteil 22 verbleibenden Hohlraums 22.3 mit Schutzgas denkbar.

Die Antenne 26 ist über den Innenleiter 30.1 einer Koaxialleitung 30 elektrisch leitend mit dem in der Spitze des Spießes 20 angeordneten Temperatursensor 24 verbunden. Der Temperatursensor 24 ist hier lediglich mit einer gestrichelten Linie angedeutet. Der Temperatursensor 24 ist zur besseren Wärmeleitung über eine nicht dargestellte Wärmeleitpaste an den elektrisch leitfähigen Abschnitt 20 der Außenhülle 28 wärmeleitend angebunden. Der Temperatursensor 24 ist ferner über den Außenleiter 30.2 der Koaxialleitung 30 elektrisch leitend mit dem elektrisch leitfähigen Abschnitt 20 verbunden. Zur einfacheren Handhabung und Montage der Temperaturmesssonde 18 ist der Außenleiter 30.2 mit dem elektrisch leitfähigen Abschnitt 20 im Kontaktbereich der beiden Abschnitte 20 und 22 der Außenhülle 28 elektrisch leitend verbunden. Der Kontaktbereich ist in Fig. 3 durch einen Kreis angedeutet.

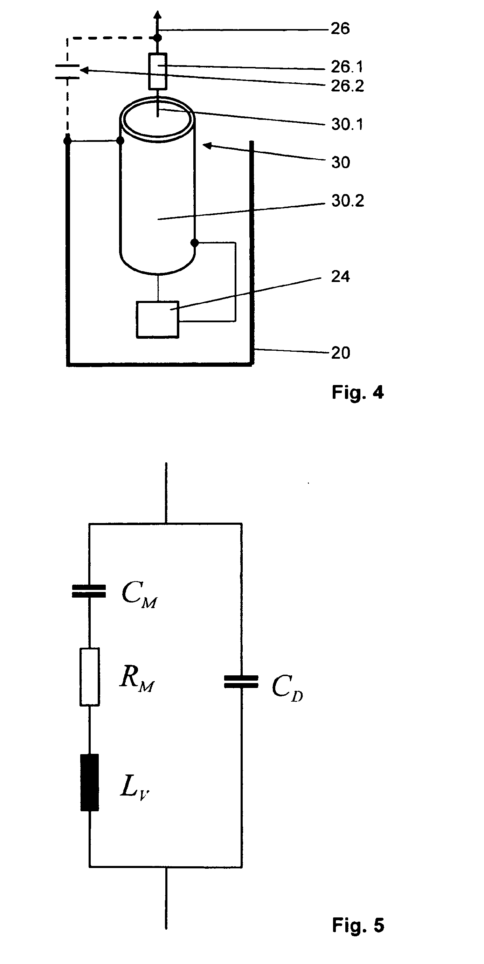

Die vorgenannten elektrischen Verbindungen der einzelnen Bauteile der Temperaturmesssonde 18 sind in Fig. 4 schematisch dargestellt. Ein elektrisches Ersatzschaltbild für die Antenne 26 zeigt Fig. 5, wobei $C_M$ für die Monopolkapazität und $R_M$ für den Wirkwiderstand des verkürzten Monopols, $L_V$ für die Induktivität der Verlängerungsspule 26.1 und $C_D$ für die Dachkapazität 26.2 zwischen der Spitze der Antenne 26 und der Referenzebene, hier dem mit dem Außenleiter 30.2 der Koaxialleitung 30 kurzgeschlossenen elektrisch leitfähigen Abschnitt 20, steht. Die Dachkapazität 26.2 ist in Fig. 4 lediglich durch gestrichelte Linien symbolisiert, da es sich nicht um ein reales Bauteil, beispielsweise einen zusätzlichen Kondensator, handelt.

Durch die geeignete Abstimmung der Materialien, und der Ausdehnungen der Antenne 26 und des elektrisch isolierenden Abschnitts 22, hier das Griffteil 22 mit dem Kern 22.1 und der Deckschicht 22.2, ist es ohne zusätzliche Bauteile möglich, die Impedanzanpassung der als verkürzter Monopol ausgebildeten Antenne 26 an den als Resonator ausgebildeten Temperatursensor 24, hier Oberflächenwellenbauelement 24, zu verbessern.

Der Formelzusammenhang hierfür ist allgemein bekannt und lautet:

$$Z_A(\text{Re}) = \frac{R_M}{R_M^2 * \varpi^2 * C_D^2 + \left(\varpi^2 * L_V * C_D - \frac{C_D}{C_M} - 1\right)^2}$$

Wobei $Z_A(\text{Re})$ für den Realteil der Antennenimpedanz, also den Wirkwiderstand in dem Arbeitsfrequenzbereich $\omega$ des Temperatursensors, also des Resonators, steht. Eine gute Impedanzanpassung ist dann erreicht, wenn der Wirkwiderstand $Z_A(\text{Re})$ der Antenne 26 etwa dem Wirkwiderstand des Temperatursensors in dessen Arbeitsfrequenzbereich $\omega$ entspricht.

Der hier als Temperatursensor verwendete Resonator, nämlich das Oberflächenwellenbauelement 24, hat einen Wirkwiderstand von 50 Ohm. Obwohl dies eine gängige Größe für handelsübliche Resonatoren ist, sind alternativ dazu auch andere Wirkwiderstände denkbar. Da der Wirkwiderstand $Z_A(\text{Re})$ der als verkürzter Monopol ausgebildeten Antenne 26 ohne Verlängerungsspule 26.1 im allgemeinen deutlich kleiner als 50 Ohm ist, muss dieser vergrößert werden. Gemäß der obigen Formel wird dies insbesondere dadurch erreicht, wenn der Nenner der Formel kleiner eins wird. Mit den üblichen Werten für die betroffenen und oben bereits erläuterten Bauteile gelingt dies vor allem durch die Vergrößerung des Quotienten $C_D/C_M$. Der vorgenannte Quotient ist durch den elektrisch isolierenden Abschnitt 22, nämlich durch die Wahl des Materials und damit der Dielektrizitätskonstante und der Ausdehnung des elektrisch isolierenden Abschnitts 22 gezielt beeinflussbar, so dass eine einfache Möglichkeit zur Impedanzanpassung der Antenne 26 an den Wirkwiderstand des Resonators 24 gegeben ist.

Durch die erfindungsgemäße Ausbildung der Temperaturmesssonde ist dies durch eine Abstimmung von Antenne und elektrisch isolierenden Abschnitt 22 nach Ausdehnung und Material möglich, ohne dass hierfür zusätzliche Bauteile, wie beispielsweise Kondensatoren zur Bildung der Dachkapazität 26.2 und elektrische Schaltungen, erforderlich wären. Die elektrisch leitende Verbindung zwischen Temperatursensor 24 und Außenhülle 28 sorgt dafür, dass die Dachkapazität 26.2 bei der erfindungsgemäßen Temperaturmesssonde 18 reproduzierbar und damit berechenbar bleibt. Würde eine solche elektrische Verbindung nicht existieren, würde die Dachkapazität 26.2 zwischen der Spitze der Antenne 26 und irgendeinem elektrisch leitenden Bauteil des Haushaltsgeräts gebildet und damit nicht reproduzierbar sein.

Die Nutzung der Außenhülle 28, insbesondere des elektrisch isolierenden Abschnitts 22 zur Impedanzanpassung bei der als verkürzter Monopol ausgebildeten Antenne 26 ist deshalb sehr vorteilhaft.

Die Erfindung ist nicht auf das vorliegende Ausführungsbeispiel begrenzt. Beispielsweise ist die erfindungsgemäße Temperaturmesssonde nicht auf den Einsatz bei Backöfen oder Haushaltsgeräten beschränkt, sondern kann auf allen Technikgebieten, bei denen Temperaturmessungen erfolgen, eingesetzt werden.

**Patentansprüche**

1. Temperaturmesssonde (18), mit einer hohlen Außenhülle (28), die einen elektrisch leitfähigen Abschnitt (20) und einen elektrisch isolierenden Abschnitt (22) aufweist, wobei in dem elektrisch leitfähigen Abschnitt (20) der Außenhülle (28) zumindest ein als Resonator ausgebildeter Temperatursensor (24) und in dem elektrisch isolierenden Abschnitt (22) eine als verkürzter Monopol ausgebildete Antenne (26) angeordnet sind, die miteinander elektrisch leitend verbunden sind,
**dadurch gekennzeichnet,**
**dass** der Temperatursensor (24) elektrisch leitend mit dem elektrisch leitfähigen Abschnitt (20) der Außenhülle (28) verbunden ist und der elektrisch isolierende Abschnitt (22) und die Antenne (26) nach Material und Ausdehnung derart aufeinander abgestimmt sind, dass der Wirkwiderstand der Antenne (26) etwa dem Wirkwiderstand des Temperatursensors (24) in dessen Arbeitsfrequenzbereich entspricht.

2. Temperaturmesssonde (18) nach Anspruch 1,
**dadurch gekennzeichnet,**
**dass** der elektrisch leitfähige Abschnitt (20) aus einem metallischen Material und der elektrisch isolierende Abschnitt (22) aus einem nichtmetallischen Material ausgebildet ist.

3. Temperaturmesssonde (18) nach Anspruch 2,
**dadurch gekennzeichnet,**
**dass** der elektrisch isolierende Abschnitt (22) als ein Griffteil aus Kunststoff ausgebildet ist.

4. Temperaturmesssonde (18) nach Anspruch 3,
**dadurch gekennzeichnet,**
**dass** der elektrisch isolierende Abschnitt (22) mit einem Hohlraum 22.3 ausgebildet ist.

5. Temperaturmesssonde (18) nach Anspruch 3 oder 4,
**dadurch gekennzeichnet,**
**dass** das Griffteil (22) einen Kern (22.1) aus einem Kunststoffmaterial hoher Festigkeit und eine Deckschicht (22.2) aus einem Kunststoffmaterial hoher Elastizität aufweist.

6. Temperaturmesssonde (18) nach mindestens einem der Ansprüche 1 bis 5,
**dadurch gekennzeichnet,**
**dass** die Antenne (26) eine Verlängerungsspule (26.1) aufweist.

7. Temperaturmesssonde (18) nach mindestens einem der Ansprüche 1 bis 6,
**dadurch gekennzeichnet,**
**dass** die elektrische Verbindung des Temperatursensors (24) mit der Antenne (26) und mit dem elektrisch leitfähigen Abschnitt (20) der Außenhülle (28) durch eine Koaxialleitung (30) gebildet ist, wobei der Temperatursensor (24) über den Innenleiter (30.1) der Koaxialleitung (30) mit der Antenne (26) und über den Außenleiter (30.2) mit dem elektrisch leitfähigen Abschnitt (20) verbunden ist.

8. Temperaturmesssonde (18) nach Anspruch 7,
**dadurch gekennzeichnet,**
**dass** die elektrische Verbindung des Außenleiters (30.2) der Koaxialleitung (30) mit dem elektrisch leitfähigen Abschnitt (20) der Außenhülle (28) in dem Kontaktbereich des elektrisch leitfähigen Abschnitts (20) mit dem elektrisch isolierenden Abschnitt (22) angeordnet ist.

9. Temperaturmesssonde (18) nach mindestens einem der Ansprüche 1 bis 8,
**dadurch gekennzeichnet,**
**dass** der Hohlraum (22.3) des elektrisch isolierenden Abschnitts (22) zur Aufnahme der Antenne (26) zumindest in dem Bereich der Antenne (26) mit Schutzgas gefüllt oder evakuiert ist.

10. Haushaltgerät mit einer Temperaturmesssonde (18) nach mindestens einem der Ansprüche 1 bis 8.

**EP 1 985 983 B1**

**Claims**

1.  A temperature measuring probe (18) having an hollow outer shell (28) including an electrically conductive section (20) and an electrically insulating section (22), wherein the electrically conductive section (20) of the outer shell (28) contains at least one temperature sensor (24) in the form of a resonator, and the electrically insulating section (22) contains an antenna (26) in the form of a shortened monopole,
    wherein the temperature sensor and the antenna are electrically conductively connected to each other, **characterised in that**
    the temperature sensor (24) is electrically conductively connected to the electrically conductive section (20) of the outer shell (28) and the material and dimensions of the electrically insulating section (22) and of the antenna (26) are matched in such a way that the effective resistance of the antenna (26) is approximately equal to the effective resistance of the temperature sensor (24) in its operating frequency range.

2.  The temperature measuring probe (18) as recited in claim 1, **characterised in that** the electrically conductive section (20) is made of a metallic material, and the electrically insulating section (22) is made of a non-metallic material.

3.  The temperature measuring probe (18) as recited in claim 2, **characterised in that** the electrically insulating section (22) is formed as a plastic handle.

4.  The temperature measuring probe (18) as recited in claim 3, **characterised in that** the electrically insulating section (22) is formed with a cavity 22.3

5.  The temperature measuring probe (18) as recited in claim 3 or 4, **characterised in that** the handle (22) includes a core (22.1) made of a high-strength plastic material and a coating (22.2) made of a highly flexible plastic material.

6.  The temperature measuring probe (18) as recited in at least one of claims 1 through 5, **characterised in that** the antenna (26) has a loading coil (26.1).

7.  The temperature measuring probe (18) as recited in at least one of claims 1 through 6, **characterised in that** the electrical connection of the temperature sensor (24) to the antenna (26) and to the electrically conductive section (20) of the outer shell (28) is provided by a coaxial line (30), the inner conductor (30.1) of said coaxial line (30) connecting the temperature sensor (24) to the antenna (26), and the outer conductor (30.2) connecting it to the electrically conductive section (20).

8.  The temperature measuring probe (18) as recited in claim 7, **characterised in that** the electrical connection between the outer conductor (30.2) of the coaxial line (30) and the electrically conductive section (20) of the outer shell (28) is located in the area of contact between the electrically conductive section (20) and the electrically insulating section (22).

9.  The temperature measuring probe (18) as recited in at least one of claims 1 through 8, **characterised in that** the cavity (22.3) of the electrically insulating section (22) accommodating the antenna (26) is evacuated or filled with inert gas, at least in the region of the antenna (26).

10. A household appliance having a temperature measuring probe (18) as recited in at least one of claims 1 through 8.

**Revendications**

1.  Sonde de mesure de température (18), avec une enveloppe extérieure (28) creuse, qui présente un tronçon électriquement conducteur (20) et un tronçon électriquement isolant (22), au moins un capteur de température (24) réalisé sous forme de résonateur étant disposé dans le tronçon électriquement conducteur (20) de l'enveloppe extérieure (28) et une antenne (26) réalisée sous forme de monopôle raccourci étant disposée dans le tronçon électriquement isolant (22), le capteur et l'antenne étant raccordés l'un à l'autre de façon électriquement conductrice, **caractérisée en ce que**
    le capteur de température (24) est raccordé de façon électriquement conductrice au tronçon électriquement conducteur (20) de l'enveloppe extérieure (28), et le tronçon électriquement isolant (22) et l'antenne (26) sont harmonisés l'un par rapport à l'autre au plan du matériau et de l'étendue de telle sorte que la résistance effective de l'antenne (26) correspond à peu près à la résistance effective du capteur de température (24) dans la plage de fréquence de

6

travail de ce dernier.

2. Sonde de mesure de température (18) selon la revendication 1,
   **caractérisée en ce que**
   le tronçon électriquement conducteur (20) est réalisé dans un matériau métallique et le tronçon électriquement isolant (22) dans un matériau non métallique.

3. Sonde de mesure de température (18) selon la revendication 2,
   **caractérisée en ce que**
   le tronçon électriquement isolant (22) est réalisé sous la forme d'une partie de prise en matière plastique.

4. Sonde de mesure de température (18) selon la revendication 3,
   **caractérisée en ce que**
   le tronçon électriquement isolant (22) est réalisé avec une cavité (22.3).

5. Sonde de mesure de température (18) selon la revendication 3 ou 4,
   **caractérisée en ce que**
   la partie de prise (22) présente un noyau (22.1) en matériau plastique très solide et une couche de couverture (22.2) en matériau plastique très élastique.

6. Sonde de mesure de température (18) selon au moins une des revendications 1 à 5,
   **caractérisée en ce que**
   l'antenne (26) présente une bobine de prolongement (26.1).

7. Sonde de mesure de température (18) selon au moins une des revendications 1 à 6,
   **caractérisée en ce que**
   le raccordement électrique du capteur de température (24) à l'antenne (26) et au tronçon électriquement conducteur (20) de l'enveloppe extérieure (28) est formé par une ligne coaxiale (30), le capteur de température (24) étant, par le biais du conducteur intérieur (30.1) de la ligne coaxiale (30), raccordé à l'antenne (26), et étant raccordé, par le biais du conducteur extérieur (30.2), au tronçon électriquement conducteur (20).

8. Sonde de mesure de température (18) selon la revendication 7,
   **caractérisée en ce que**
   le raccordement électrique du conducteur extérieur (30.2) de la ligne coaxiale (30) au tronçon électriquement conducteur (20) de l'enveloppe extérieure (28) est disposé dans la zone de contact du tronçon électriquement conducteur (20) avec le tronçon électriquement isolant (22).

9. Sonde de mesure de température (18) selon au moins une des revendications 1 à 8,
   **caractérisée en ce que**
   la cavité (22.3) du tronçon électriquement isolant (22) destinée à loger l'antenne (26) est remplie de gaz de protection ou est mise sous vide au moins dans la zone de l'antenne (26).

10. Appareil électroménager avec une sonde de mesure de température (18) selon au moins une des revendications 1 à 8.

4  8  2

2

2

12

10

6

18

16

14

**Fig. 1**

18

20

22

24

26

26.1

**Fig. 2**

**Fig. 3**

26
26.1
26.2
30.1
30
30.2
24
20

**Fig. 4**

$C_M$

$R_M$

$C_D$

$L_V$

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005015028 A1